# EUROPEAN PATENT SPECIFICATION

(11) **EP 4 253 867 B1**
(45) Date of publication and mention of the grant of the patent: **29.01.2025**
(21) Application number: 21897860.9
(22) Date of filing: 18.11.2021
(51) Int. Cl.: F24H 15/00, H02J 13/00, G06Q 50/06, H02J 3/00, H02J 3/14, F24D 3/00, F24D 3/18, F24H 4/02, F24H 4/06, F24H 15/429, F24H 15/443, F24H 1/12, F24H 1/52, F24D 12/02, F24H 15/156, F24H 15/16, F24D 19/10

(54) **FLUID HEATING SYSTEM**
FLUIDHEIZSYSTEM
SYSTÈME DE CHAUFFAGE DE FLUIDE

(30) Priority: 24.11.2020 JP 2020194598
(43) Date of publication of application: 04.10.2023
(73) Proprietor: Daikin Industries, Ltd., Osaka-shi, Osaka 530-0001 (JP)
(72) Inventor: MATSUMOTO, Akihito, Osaka-shi, Osaka 530-001 (JP); OKA, Yasuhiko, Osaka-shi, Osaka 530-001 (JP)
(74) Representative: Global IP Europe Patentanwaltskanzlei
(86) International application number: PCT/JP2021/042478
(87) International publication number: WO 2022/113886

(56) References cited:
- IT-A1- 201800 009 760
- JP-A- 2012 092 997
- JP-A- 2012 092 997
- JP-A- 2015 132 411
- JP-A- 2015 132 411
- JP-A- 2017 048 991
- JP-A- 2017 048 991
- JP-A- 2019 143 913
- JP-A- 2019 143 913
- JP-A- 2020 148 423
- JP-A- 2020 148 423
- US-A1- 2012 042 673

## Description

### TECHNICAL FIELD

The present invention relates to a fluid heating system, and particularly to a fluid heating system including a heat pump apparatus and a combustion apparatus.

### BACKGROUND ART

Patent Literature 1 (Japanese Patent No. 5,597,767) discloses a heating apparatus with improved cost effectiveness, the heating apparatus including an electrically driven heat pump and a fuel combustion boiler. This heating apparatus is controlled based on a building envelope coefficient of performance (BECOP) with attention given to an electricity rate and a fuel charge, in order to reduce the running cost.

JP 2012 092997 A discloses a fluid heating system comprising: a heat pump apparatus including a refrigerant circuit through which a refrigerant circulates, the heat pump apparatus being configured to carry out an operation with electric power supplied by a power company having power generation plants; a flow path through which a fluid heated with the refrigerant flows; a combustion apparatus including a combustion unit, the combustion apparatus being configured to carry out an operation of heating the fluid, separately from the heat pump apparatus; and a control unit including an upper limit value acquisition unit configured to acquire an upper limit value of power consumption by the heat pump apparatus, and an operation control unit configured to control the operation of the heat pump apparatus to maintain the power consumption at a value below the upper limit value, and configured to cause the combustion apparatus to carry out the operation when an amount of heat applied to the fluid by the heat pump apparatus is insufficient.

### SUMMARY OF THE INVENTION

### <Technical Problem>

Reducing a running cost is significant for a fluid heating system configured to heat a fluid, such as a heating apparatus, from a user's point of view.

For such a fluid heating system, however, control with only the running cost as an index is not necessarily suitable from another point of view.

### <Solution to Problem>

A first aspect is directed to a fluid heating system including a heat pump apparatus, a flow path, a combustion apparatus, and a control unit. The heat pump apparatus includes a refrigerant circuit through which a refrigerant circulates. The heat pump apparatus is configured to carry out an operation with electric power. A fluid heated with the refrigerant flows through the flow path. The combustion apparatus includes a combustion unit. The combustion apparatus is configured to carry out an operation of heating the fluid, separately from the heat pump apparatus. The control unit includes an upper limit value acquisition unit and an operation control unit. The upper limit value acquisition unit is configured to acquire an upper limit value of power consumption by the heat pump apparatus. The operation control unit is configured to control the operation of the heat pump apparatus to maintain the power consumption at a value below the upper limit value in a first period of time during which the power consumption is restricted to a value below the upper limit value. The operation control unit is also configured to cause the combustion apparatus to carry out the operation on condition that an amount of heat applied to the fluid by the heat pump apparatus is insufficient in the first period of time.

According to this configuration, the operation control unit controls the operation of the heat pump apparatus to maintain the power consumption at a value below the upper limit value in the first period of time during which the power consumption is restricted to a value below the upper limit value. This configuration thus enables reduction in power consumption by the heat pump apparatus during peak hours of electric power supply in a region where the fluid heating system is installed, and also enables achievement of a balance between a supply of electricity and a demand for electricity in the region, for example.

According to this configuration, the operation control unit also causes the combustion apparatus to carry out the operation for a supplemental purpose when an amount of heat applied to the fluid by the heat pump apparatus is insufficient in the first period of time. This configuration thus allows a user of the fluid heating system to enjoy air heating, hot water supply, and the like without considerable deterioration in comfort.

A second aspect is directed to the fluid heating system according to the first aspect, in which the upper limit value acquisition unit receives, from an external apparatus, information about the upper limit value determined in accordance with a situation of an external power generation plant.

According to this configuration, the upper limit value acquisition unit acquires information about the upper limit value from, for example, a power supply company that supplies electricity to the heat pump apparatus or an aggregator that provides an energy management service for keeping a balance between a supply of electricity and a demand for electricity. This configuration allows a user or a manager of the fluid heating system to directly or indirectly give cooperation to an electricity supplier.

A third aspect is directed to the fluid heating system according to the first aspect, further including a first calculation unit and a second calculation unit. The first calculation unit is configured to calculate a total emission of carbon dioxide, based on information on an emission of carbon dioxide in producing electric power per unit supply power. The total emission of carbon dioxide corresponds to a sum of an emission of carbon dioxide from the heat pump apparatus during the operation and an emission of carbon dioxide from the combustion apparatus during the operation. The second calculation unit is configured to calculate the upper limit value of the power consumption, so as to reduce the total emission of carbon dioxide. The upper limit value acquisition unit acquires the upper limit value of the power consumption, from the second calculation unit.

It is typically recognized that carbon dioxide is emitted in large amounts from a combustion apparatus. In addition, carbon dioxide is emitted in generating (producing) electric power to be consumed by a heat pump apparatus. Furthermore, carbon dioxide is emitted upon thermal power generation since oil is burned, and carbon dioxide is also emitted in manufacturing a power generation apparatus that uses natural energy. In view of these respects, according to this configuration, the upper limit value acquisition unit calculates the upper limit value of the power consumption, so as to reduce the total emission of carbon dioxide. This configuration allows the fluid heating system to effectively contribute to reduction in emission of carbon dioxide on a global scale.

A fourth aspect is directed to the fluid heating system according to any one of the first to third aspects, in which on condition that the amount of heat applied to the fluid by the heat pump apparatus is insufficient in the first period of time, the operation control unit causes the combustion apparatus to carry out the operation to heat the fluid by an insufficient amount of heat owing to the restriction on the power consumption by the heat pump apparatus to a value below the upper limit value.

Typically, the emission of carbon dioxide from the heat pump apparatus during operation is smaller than the emission of carbon dioxide from the combustion apparatus during operation. In view of this respect, according to this configuration, the operation control unit causes the heat pump apparatus to carry out the operation preferentially and causes the combustion apparatus to carry out the operation in the first period of time during which the power consumption is restricted to a value below the upper limit value, by the insufficient amount of heat owing to the restriction on the power consumption by the heat pump apparatus to a value below the upper limit value. This configuration allows the fluid heating system to effectively contribute to reduction in emission of carbon dioxide on a global scale.

A fifth aspect is directed to the fluid heating system according to the second aspect, further including a first calculation unit. The first calculation unit is configured to calculate a total emission of carbon dioxide corresponding to a sum of an emission of carbon dioxide from the heat pump apparatus during the operation and an emission of carbon dioxide from the combustion apparatus during the operation. The operation control unit determines a ratio between heat applied to the fluid by the heat pump apparatus and heat applied to the fluid by the combustion apparatus and controls the operation of the heat pump apparatus and the operation of the combustion apparatus, so as to reduce the total emission of carbon dioxide, in a second period of time during which the power consumption is not necessarily restricted to a value below the upper limit value.

According to this configuration, in the second period of time during which the power consumption is not necessarily restricted to a value below the upper limit value, the operation control unit performs the control different from the control in the first period of time. The fluid heating system controls the operation of the heat pump apparatus and the operation of the combustion apparatus so as to reduce the total emission of carbon dioxide in the second period of time, thereby effectively contributing to reduction in emission of carbon dioxide on a global scale.

A sixth aspect is directed to the fluid heating system according to the second or fifth aspect, further including a third calculation unit. The third calculation unit is configured to calculate a first running cost of the heat pump apparatus during the operation and a second running cost of the combustion apparatus during the operation. The operation control unit determines a ratio between heat applied to the fluid by the heat pump apparatus and heat applied to the fluid by the combustion apparatus and controls the operation of the heat pump apparatus and the operation of the combustion apparatus, so as to reduce a sum of the first running cost and the second running cost, in a third period of time during which the power consumption is not necessarily restricted to a value below the upper limit value.

According to this configuration, in the third period of time during which the power consumption is not necessarily restricted to a value below the upper limit value, the operation control unit performs the control different from the control in the first period of time. The fluid heating system controls the operation of the heat pump apparatus and the operation of the combustion apparatus so as to reduce the sum of the first running cost and the second running cost in the third period of time, thereby allowing the user to enjoy a merit of cost reduction. On the other hand, the fluid heating system could keep the balance between the supply of electricity and the demand for electricity in the region in the first period of time as described above, thereby allowing the user to enjoy air heating, hot water supply, and the like without considerable deterioration in comfort.

A seventh aspect is directed to the fluid heating system according to any one of the first to sixth aspects, in which the fluid to be heated with the refrigerant is water. The water heated in the flow path is used for one of or both air heating and hot water supply.

An eighth aspect is directed to the fluid heating system according to any one of the first to sixth aspects, in which the fluid to be heated with the refrigerant is air. The air heated in the flow path is used for air heating.

### BRIEF DESCRIPTION OF THE DRAWINGS

FIG. 1 is a schematic diagram illustrating a power consumption management system.
FIG. 2 is a schematic diagram illustrating a configuration of a power management apparatus 10 in a power company.
FIG. 3 is a schematic diagram illustrating a configuration of a storage unit 14 in the power management apparatus 10.
FIG. 4 is a schematic diagram illustrating a configuration of a control device 30 installed in each building.
FIG. 5 is a schematic diagram illustrating a configuration of a heating system 203 installed in each building.
FIG. 6 is a schematic diagram illustrating a configuration of a heating control unit 280.
FIG. 7 is a graph showing a comparison between control in a second period of time and control in a third period of time.
FIG. 8 is a graph corresponding to the graph of FIG. 7 to which the axis of power consumption is added.
FIG. 9 is a graph showing a relationship among an outside temperature, an HP operating ratio, and a power consumption in each of a first period of time and the second period of time.
FIG. 10 is a graph showing a relationship between the outside temperature and the HP operating ratio in each of the first period of time, the second period of time, and the third period of time.
FIG. 11 is a graph showing a relationship between various kinds of control and a CO2 emission.
FIG. 12 is a schematic diagram illustrating a configuration of an air conditioning system according to Modification A.
FIG. 13 is a schematic diagram illustrating an exemplary case where the air conditioning system according to Modification A is installed in a house.

### DESCRIPTION OF EMBODIMENTS

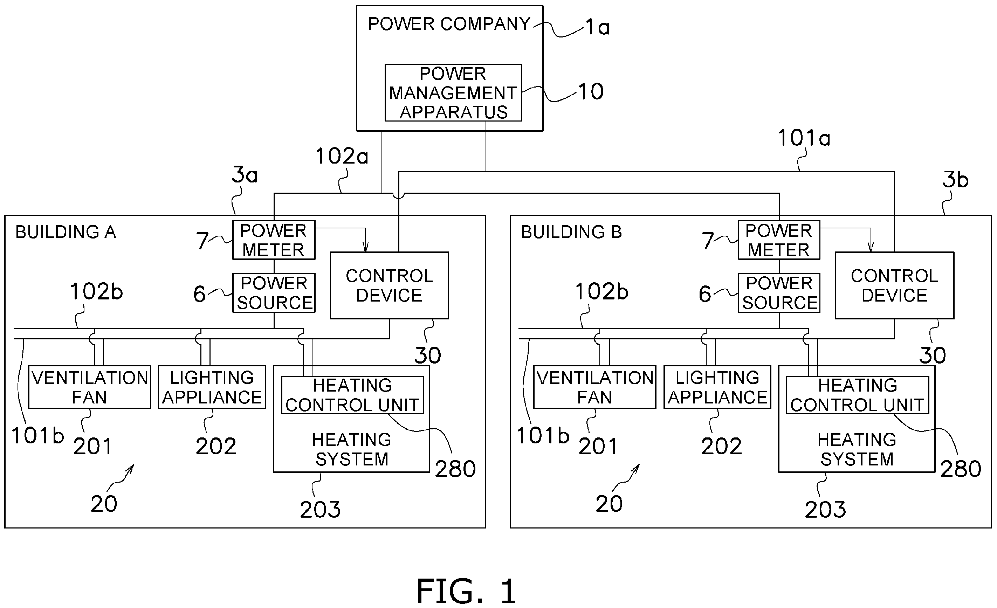

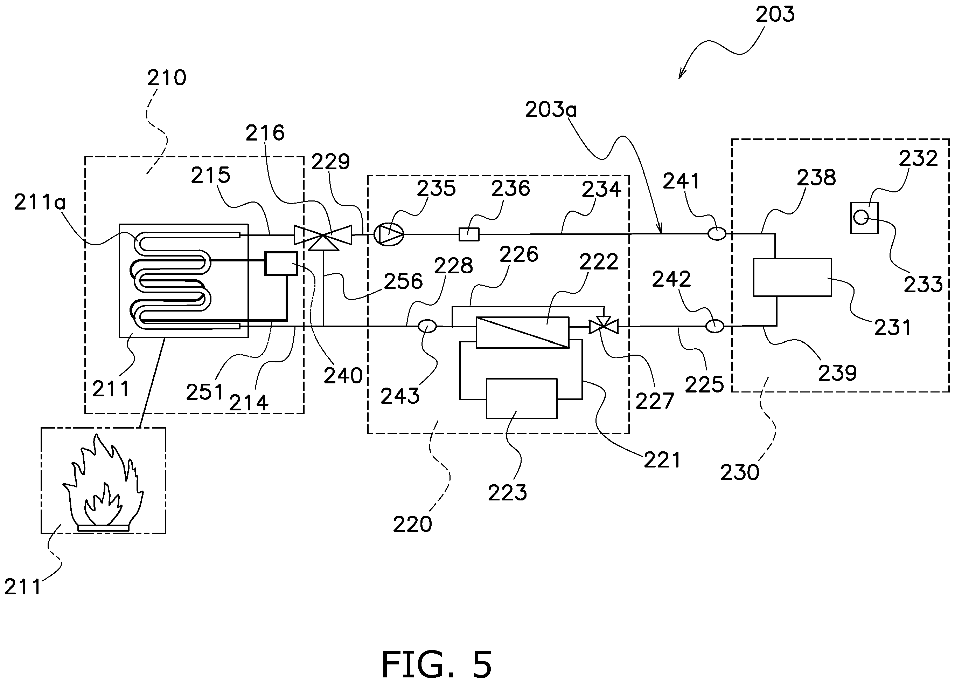

A heating system 203 illustrated in FIGS. 1 and 5 is an example of a fluid heating system for carrying out a heating operation by supplying, to a heat dissipator, water (an example of a fluid) heated by one of or both a heat pump unit to be driven with electric power and a boiler unit configured to burn fuel. The heating system 203 is one of appliances 20 owned by a user who is an electricity consumer, in a power consumption management system illustrated in FIG. 1. The following describes the power consumption management system first, and then describes the heating system 203 in detail.

### (1) General configuration of power consumption management system

FIG. 1 is a schematic diagram illustrating the power consumption management system. The power consumption management system refers to a mechanism that gives an incentive to a user of an appliance 20 when the user makes an adjustment to an amount of electric power to be consumed by the appliance 20 for a predetermined period (hereinafter, referred to as an adjustment period) in accordance with a control request from a power company 1a. The power consumption management system gives an incentive for each user of a plurality of appliances 20. Each user has contract with the power company 1a as to the use of electric power in advance, and the details of an incentive are determined based on the contract in advance. The power consumption management system is constituted of the power company 1a which is an electricity supplier as well as apparatuses, appliances, and devices installed in buildings A and B which are electricity consumers.

The power company 1a has a power management apparatus 10. The power management apparatus 10 issues a "control request" for encouraging a power adjustment to each of the appliances 20. The power management apparatus 10 also performs, for example, calculation of an amount of an incentive to be given to each user, based on, for example, a record showing that the appliances 20 respond to the control request.

Examples of facilities 3a and 3b in the buildings A and B may include, but not limited to, an office, a tenant, a factory, and an ordinary household. The buildings A and B are each equipped with, in addition to the appliances 20, a power source 6 configured to supply electric power to the appliances 20, a power meter 7 configured to measure amounts of electric power supplied from the power source 6 to the appliances 20, and a control device 30 configured to control the appliances 20. The facilities 3a and 3b in the buildings A and B receive electric power from the power company 1a through a power supply line 102a. In each building, the appliances 20 receive electric power from the power source 6 through a power supply line 102b located indoors. The power management apparatus 10 is connected to the control devices 30 via, for example, the Internet 101a. In each building, the control device 30 is connected to the appliances 20 via, for example, a dedicated control line 101b.

It should be noted that FIG. 1 illustrates the limited number of buildings A and B as well as the limited numbers of apparatuses, appliances, and devices in each building; however, the present disclosure is not limited to these numbers.

According to an aspect, the foregoing power consumption management system is a "demand response", and power adjustment control for achieving the demand response is referred to as "demand response control". Control to be performed on each heating system 203 in a first period of time (to be described later) is an example of the "demand response control".

### (2) Constituents of power consumption management system

### (2-1) Power management apparatus 10

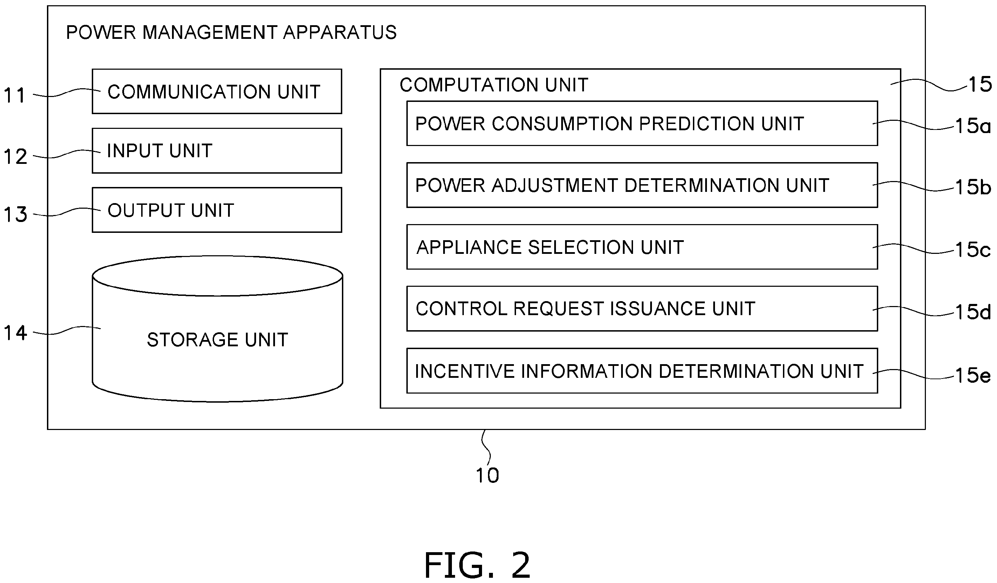

FIG. 2 is a schematic diagram illustrating a configuration of the power management apparatus 10. The power management apparatus 10 includes a communication unit 11, an input unit 12, an output unit 13, a storage unit 14, and a computation unit 15.

The communication unit 11 is configured to communicate with the control devices 30. For example, the communication unit 11 includes a network interface that enables a connection to the Internet 101a.

The input unit 12 is configured to input information to the power management apparatus 10. For example, the input unit 12 includes an operation button, a keyboard, and a mouse.

The output unit 13 is configured to output, for example, information stored in the power management apparatus 10. For example, the output unit 13 includes a display.

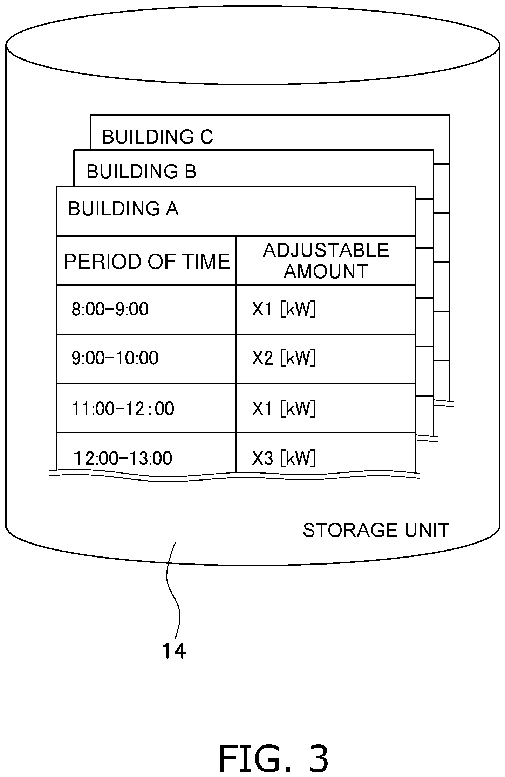

The storage unit 14 is configured to store, for example, information input to the power management apparatus 10. For example, the storage unit 14 includes a hard disk. As illustrated in FIG. 3, the storage unit 14 stores, for example, combinations of an adjustable amount of electric power with an adjustable period of time in each of the buildings A and B. The storage unit 14 is also configured to store, for example, a program to be executed by the computation unit 15.

The computation unit 15 is configured to perform various computations based on, for example, information stored in the power management apparatus 10. The computation unit 15 is practicable using a computer. The computation unit 15 includes a control computation device and a storage device. The control computation device may be a processor such as a central processing unit (CPU) or a graphics processing unit (GPU). The control computation device reads a program from the storage unit 14, and performs predetermined image processing and computation processing in accordance with this program. In addition, the control computation device is capable of writing a result of the computation processing in the storage device, and reading information from the storage device, in accordance with the program. The computation unit 15 has various functions illustrated in the form of functional blocks in FIG. 2 and practicable by the control computation device. Specifically, when the control computation device reads and executes a program, the computation unit 15 functions as a power consumption prediction unit 15a, a power adjustment determination unit 15b, an appliance selection unit 15c, a control request issuance unit 15d, and an incentive information determination unit 15e each illustrated in FIG. 2.

The power consumption prediction unit 15a is configured to predict a supply of electricity and a demand for electricity and to predict power consumption after a lapse of a predetermined time. The power consumption prediction unit 15a is also configured to determine whether the demand for electricity after the lapse of the predetermined time possibly exceeds a predetermined supply of electricity. The supply of electricity is determined depending on a situation of a power generation plant operated by the power company 1a. The power generation plant refers to a plant that generates electric power by, for example, thermal power, wind power, or solar power.

The power adjustment determination unit 15b is configured to determine, when the power consumption prediction unit 15a determines that the demand for electricity after the lapse of the predetermined time possibly exceeds the predetermined supply of electricity, an adjustment amount, an adjustment time of day, and an adjustment period for reduction in power consumption.

The appliance selection unit 15c is configured to select one of the appliances 20 to be subjected to demand response control, based on information on the appliances 20 stored in the storage unit 14 and the information for reduction in power consumption determined by the power adjustment determination unit 15b.

The control request issuance unit 15d is configured to issue a "control request" for encouraging an adjustment to electric power usage, to the corresponding control device 30 selected by the appliance selection unit 15c. The control request includes information such as an amount of electric power to be adjusted and a period of time to be adjusted. An amount of electric power to be adjusted is previously agreed depending on contract between an electricity supplier and an electricity consumer in some cases. In such a case, the control request does not include information about the amount of electric power to be adjusted.

The incentive information determination unit 15e is configured to determine information about an amount of an incentive to be given to the corresponding user. The amount of the incentive is determined from, for example, the product of an amount of electric power adjusted and a unit price of the incentive. The incentive information determination unit 15e changes, for example, the unit price of the incentive in accordance with a situation.

### (2-2) Appliance 20

The appliances 20 are each configured to operate under a control condition set by the corresponding control device 30. The power consumption management system adjusts an amount of electric power to be consumed, by causing the appliances 20 to operate under a control condition satisfying a control request from the power management apparatus 10.

The appliances 20 include, in addition to the heating system 203, a ventilation fan 201, a lighting appliance 202, and the like. The ventilation fan 201 is switched between an ON state and an OFF state. The ventilation fan 201 consumes a certain amount of electric power during operation. An example of the lighting appliance 202 is a lighting appliance that is switched between an ON state and an OFF state, and the lighting appliance of this type consumes a certain amount of electric power during operation. Another example of the lighting appliance 202 is a lighting appliance whose illuminance is switched in a multilevel manner, and the lighting appliance of this type consumes an amount of electric power that varies for each illuminance. Each heating system 203, which is an example of a fluid heating system, includes the boiler unit 210 that consumes a slight amount of electric power and the heat pump unit 220 that consumes a large amount of electric power, as described above. The heating system 203 will be described in detail later.

### (2-3) Control device 30

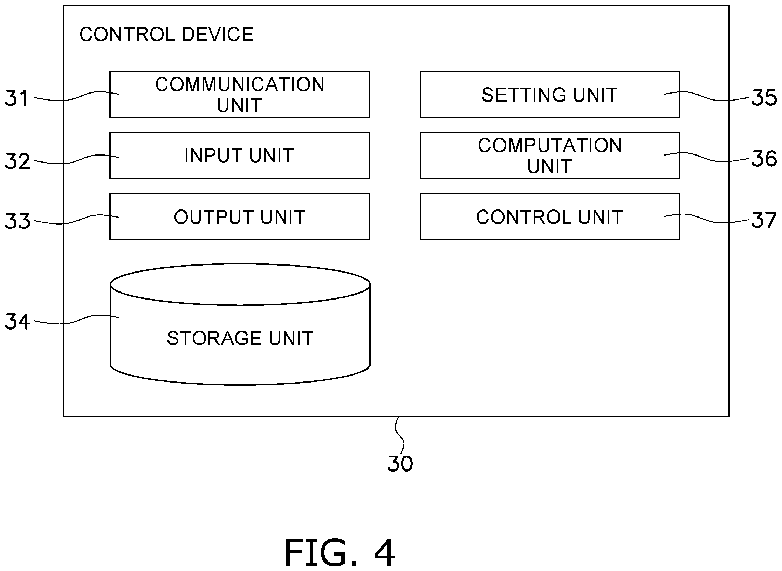

FIG. 4 is a schematic diagram illustrating a configuration of each control device 30. Each control device 30 is used in the power consumption management system and is configured to control the corresponding appliances 20. Each control device 30 includes a communication unit 31, an input unit 32, an output unit 33, a storage unit 34, a setting unit 35, a computation unit 36, and a control unit 37.

The communication unit 31 is configured to communicate with the power management apparatus 10. For example, the communication unit 31 includes a network interface that enables a connection to the Internet 101a.

The input unit 32 is configured to input information to the control device 30. For example, the input unit 32 includes a touch screen that covers an operation button and a display of the output unit 33. The input unit 32 allows the corresponding user to input various commands, such as a change to settings and a change to operating modes, for each appliance 20.

The output unit 33 is configured to output, for example, information stored in the control device 30. For example, the output unit 33 includes the display. For example, the output unit 33 outputs, to the display, a screen showing an operating state of each appliance 20 to present, to the user, an ON or OFF state, an operating mode, a set temperature, an illuminance, an amount of ventilation, an operating time, an operating rate, and other kinds of information about an operating capacity of the appliance 20 during operation, and a current amount of electric power consumed by the appliance 20.

The storage unit 34 is configured to store, for example, information input to the control device 30. For example, the storage unit 34 includes a hard disk. The storage unit 34 is also configured to store a program readable and executable by the computation unit 36 to be described later. The storage unit 34 is also configured to store information on a control condition and power consumption, according to the type of appliance 20.

The setting unit 35 is configured to set a control condition for each appliance 20, based on, for example, information input through the input unit 32.

The computation unit 36 is configured to perform various computations based on, for example, information stored in the control device 30. For example, the computation unit 36 includes a CPU, a read only memory (ROM), and a random access memory (RAM). The computation unit 36 has a function practicable by reading and executing the foregoing program stored in the storage unit 34. The computation unit 36 has a function of calculating an amount of a gained incentive, based on a control condition set by the setting unit 35.

The control unit 37 is configured to control each appliance 20, based on, for example, a control condition set by the setting unit 35.

### (3) Heating system 203

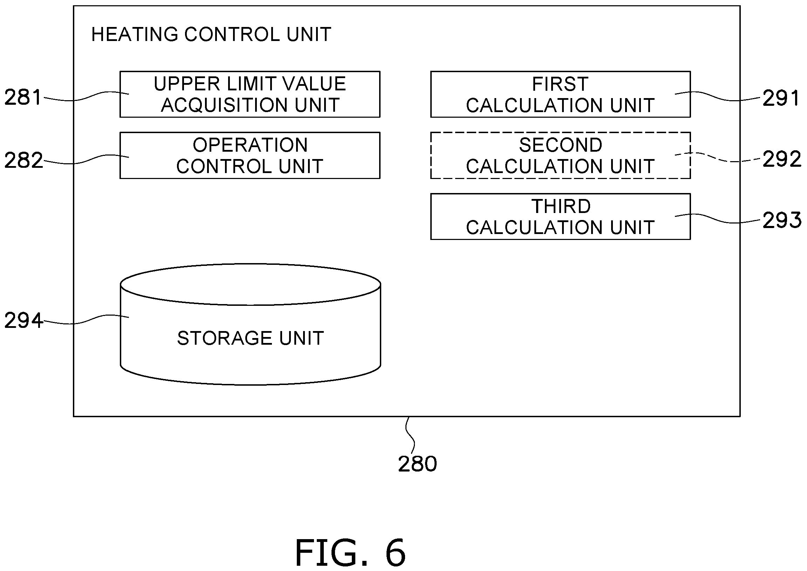

As illustrated in FIGS. 5 and 6, each heating system 203, which is an example of a fluid heating system, includes, in addition to the boiler unit 210 and the heat pump unit 220, a heat dissipation unit 230 and a heating control unit 280.

### (3-1) Boiler unit 210, heat pump unit 220, and heat dissipation unit 230

The heat dissipation unit 230 includes, in a case where the heating system 203 is used for, for example, air heating in a house, a plurality of heat dissipators respectively placed in a plurality of rooms which are heating target spaces. Each of the heat dissipators is a heat exchanger such as a radiator, an underfloor heater, or a convection heater. In FIG. 5, the plurality of heat dissipators are collectively illustrated with a block indicated by reference sign 231. In addition, one or more thermostats 232 each including a room temperature sensor 233 are placed in each heating target space. Each room temperature sensor 233 is configured to measure a temperature in a room where the room temperature sensor 233 is placed. In a case where the heat dissipation unit 230 heats the plurality of rooms corresponding to the heating target spaces, the thermostats 232 are respectively placed in the rooms or are placed in many of the rooms. Each thermostat 232 includes the room temperature sensor 233. The user of the heating system 203 sets a required room temperature, using each thermostat 232. The user may set a different required room temperature for each room. The required room temperatures in the heating target spaces may be set in a centralized manner. Each room temperature sensor 233 is configured to measure a current room temperature in the corresponding room.

The heat pump unit 220 is an example of a heat pump apparatus configured to carry out an operation with electric power. In the present application, "HP" in the drawings represents the heat pump unit 220. The heat pump unit 220 includes a known heat pump circuit 221. The heat pump circuit 221 is an annular refrigerant circuit including a compressor, a condenser, an expansion mechanism, and an evaporator that are connected with a refrigerant pipe. In a heating mode, a first heat exchanger 222 functions as the condenser. The evaporator (not illustrated) is disposed in an outdoor unit 223. Each of the compressor (not illustrated) and the expansion mechanism (not illustrated) is also disposed in the outdoor unit 223. The heat pump circuit 221 used herein is an air heat pump. The evaporator in the outdoor unit 223 takes away heat from outdoor air, so that the refrigerant flowing through the heat pump circuit 221 evaporates and then flows toward the heat exchanger 222 for condensation. In a condensation process, the heat of the refrigerant is transferred to a working fluid (to be described later). Desirably, the compressor in the heat pump circuit 221 operates in variable frequency so as to be operable at partial load. An outdoor temperature sensor may be disposed in the outdoor unit 223 or may be placed at a different position where the outdoor temperature sensor is capable of measuring an outdoor temperature with reliability.

The boiler unit 210 is an example of a combustion apparatus. The boiler unit 210 is a known condensing boiler of a gas combustion type. The boiler unit 210 includes a burner 211 for heating the working fluid (to be described later). The burner 211 is an example of a combustion unit. The burner 211 is configured to heat the working fluid, separately from the heat pump unit 220. The burner 211 is also configured to produce domestic hot water 240. The domestic hot water 240 is directly heated, in use, by the burner 211 when flowing through a pipe 251. The boiler unit 210 includes an inflow pipe 214 connected to an inlet of a second heat exchanger 211a to be heated by the burner 211. The boiler unit 210 also includes an outflow pipe 215 connected to an outlet of the second heat exchanger 211a.

The heat pump unit 220 includes a first inflow pipe 225 and a first outflow pipe 228. The first inflow pipe 225 is connected, via a three-way valve 227, to an inlet of the first heat exchanger 222 and a bypass pipe 226 for bypassing the first heat exchanger 222. The first outflow pipe 228 is connected to an outlet of the first heat exchanger 222 and the bypass pipe 226. The heat pump unit 220 also includes a second inflow pipe 229. The second inflow pipe 229 is connected to a second outflow pipe 234 via a pump 235 and a flow rate sensor 236.

A three-way valve 216 and a bypass pipe 256 are disposed between the boiler unit 210 and the heat pump unit 220. The bypass pipe 256 is a pipe for bypassing the boiler unit 210. The working fluid (to be described later) bypassing the boiler unit 210 can be heated only by the heat pump unit 220.

The second outflow pipe 234 of the heat pump unit 220 is connected to an inflow pipe 238 of the heat dissipation unit 230. The heat dissipation unit 230 includes an outflow pipe 239 connected to the first inflow pipe 225 of the heat pump unit 220.

A first temperature sensor 241 is disposed on the inflow pipe 238 of the heat dissipation unit 230 or is disposed on the second outflow pipe 234 of the heat pump unit 220 upstream of the inflow pipe 238. A second temperature sensor 242 is disposed on the outflow pipe 239 of the heat dissipation unit 230 or is disposed on the first inflow pipe 225 of the heat pump unit 220 downstream of the outflow pipe 239. A third temperature sensor 243 is disposed on the first outflow pipe 228 of the heat pump unit 220.

The pipes 239, 225, 228, 214, 215, 229, 234, and 238 form a flow circuit 203a and cause the working fluid, such as water, to flow toward the heat dissipation unit 230. The working fluid used herein is water. The first temperature sensor 241 is configured to measure a temperature of the working fluid flowing into the heat dissipation unit 230 through the pipe 238. The second temperature sensor 242 is configured to measure a temperature of the working fluid flowing out of the heat dissipation unit 230. The third temperature sensor 243 is configured to measure a temperature of the working fluid at a position downstream of the first heat exchanger 222 of the heat pump unit 220. The pump 235 is configured to allow the working fluid to circulate through the flow circuit 203a. The flow rate sensor 236 is configured to measure a flow rate of the working fluid.

### (3-2) Heating control unit 280

The heating control unit 280 is configured to control, for example, the compressor and expansion mechanism of the heat pump unit 220, the pump 235, the three-way valve 227, the burner 211 of the boiler unit 210, and the three-way valve 216, in accordance with an instruction and a request from each thermostat 232. The heating control unit 280 is practicable using a computer. The heating control unit 280 includes a control computation device and a storage unit 294. The control computation device may be a processor such as a CPU or a GPU. The control computation device reads a program storaged in the storage unit 294, and performs predetermined image processing and computation processing in accordance with this program. In addition, the control computation device is capable of writing a result of the computation processing in the storage device, and reading information from the storage unit 294, in accordance with the program. The heating control unit 280 includes various functional units 281, 282, 291, and 293 (see FIG. 6) practicable by the control computation device. The storage unit 294 may serve as a database.

As illustrated in FIG. 6, the heating control unit 280 includes, in addition to the storage unit 294, an upper limit value acquisition unit 281, an operation control unit 282, a first calculation unit 291, and a third calculation unit 293.

### (3-2-1) Upper limit value acquisition unit 281

The upper limit value acquisition unit 281 is configured to acquire an upper limit value of power consumption for each period of time. This upper limit value is determined by the power management apparatus 10 and is imposed on the heating system 203. Specifically, the control request issuance unit 15d of the power management apparatus 10 issues a "control request" to the control device 30 such that an amount of electric power to be consumed by the heating system 203 in each building falls below a predetermined upper limit value during a period of time from 13:00 to 14:00, for example. The control device 30 then sends the upper limit value of power consumption by the heating system 203, to the upper limit value acquisition unit 281. The upper limit value acquisition unit 281 thus receives the upper limit value.

As described above, the power management apparatus 10 determines, for each period of time, an upper limit value of power consumption by each of the appliances 20 including the heating system 203, based on a supply of electricity which is determined in accordance with a situation of the power generation plant during operation, and a demand for electricity which is predicted. Specifically, the power adjustment determination unit 15b determines an adjustment amount, an adjustment time of day, and an adjustment period for reduction in power consumption. The control request issuance unit 15d then issues a "control request" for encouraging an adjustment to electric power usage, to each control device 30.

### (3-2-2) First calculation unit 291

The first calculation unit 291 is configured to calculate a total emission of carbon dioxide, based on information on an emission of carbon dioxide in producing electric power per unit supply power. In the present application, "CO2" represents carbon dioxide, and "CO2 EMISSION" represents an emission of carbon dioxide in the drawings. The total emission of carbon dioxide corresponds to a sum of an emission of carbon dioxide concerning power consumption by the heat pump unit 220 during operation and an emission of carbon dioxide resulting from fuel combustion by the boiler unit 210 during operation. The heating control unit 280 receives the information on the emission of carbon dioxide in producing electric power per unit supply power, periodically from the power management apparatus 10 via the control device 30.

It should be noted that the emission of carbon dioxide in producing electric power per unit supply power varies depending on, for example, the number of operating power generation plants of the power company 1a and the operating rate of each operating power generation plant. For example, in a case where the power company 1a mainly relies on photovoltaic power generation and wind power generation rather than thermal power generation, an emission of carbon dioxide per unit supply power decreases. On the other hand, in a case where the power company 1a mainly relies on thermal power generation, the emission of carbon dioxide per unit supply power increases. The emission of carbon dioxide resulting from the power consumption by the heat pump unit 220 during operation decreases in a case where the heat pump unit 220 is capable of carrying out the operation under an environmental condition with good coefficient of performance (COP). However, this emission of carbon dioxide increases when the COP of the heat pump unit 220 lowers due to, for example, a low outside temperature.

### (3-2-3) Third calculation unit 293

The third calculation unit 293 is configured to calculate a first running cost of the heat pump unit 220 during operation and a second running cost of the boiler unit 210 during operation. Specifically, the first running cost refers to an electricity rate for the operation of the heat pump unit 220. The second running cost refers to a fuel (e.g., gas) charge for the operation of the boiler unit 210. The third calculation unit 293 calculates the first running cost and the second running cost as disclosed in, for example, WO 2012/077333 A1 (publication date: June 14, 2012).

### (3-2-4) Operation control unit 282

The operation control unit 282 is configured to control the operation of the heat pump unit 220 to maintain the power consumption by the heat pump unit 220 at a value below the upper limit value in a first period of time during which the power consumption in the heating system 203 is restricted to a value below the upper limit value. For example, the operation control unit 282 lowers the capacity of the compressor of the heat pump unit 220, thereby reducing the power consumption by the heat pump unit 220.

It should be noted that the first period of time is determined from the adjustment time of day and adjustment period of the foregoing "control request". The upper limit value of the power consumption is determined based on the adjustment amount of the "control request" for reducing the power consumption.

When the amount of heat applied to the working fluid only by the heat pump unit 220 is insufficient in the first period of time, the operation control unit 282 causes the boiler unit 210 to carry out the operation, so that the burner 211 operates to apply heat to the working fluid by an insufficient amount of heat owing to the restriction on the power consumption by the heat pump unit 220 to a value below the upper limit value.

The operation control unit 282 is also configured to determine a ratio between the heat applied to the working fluid by the heat pump unit 220 and the heat applied to the working fluid by the boiler unit 210 and control the operation of the heat pump unit 220 and the operation of the boiler unit 210, so as to reduce the total emission of carbon dioxide in a second period of time during which the power consumption is not necessarily restricted to a value below the upper limit value.

The operation control unit 282 is also configured to determine a ratio between the heat applied to the working fluid by the heat pump unit 220 and the heat applied to the working fluid by the boiler unit 210 and control the operation of the heat pump unit 220 and the operation of the boiler unit 210, so as to reduce a sum of the first running cost and the second running cost in a third period of time during which the power consumption is not necessarily restricted to a value below the upper limit value. The operation control unit 282 carries out an operation of reducing a running cost (an operation cost) as disclosed in, for example, WO 2012/077333 A1 (publication date: June 14, 2012).

It should be noted that the periods of time other than the first period of time are set at the second period of time by default. The user is able to set and change a part of the second period of time or the entire second period of time as the third period of time, using the thermostat 232 or another setting device. In a case where the reduction in running cost is prioritized over the reduction in emission of carbon dioxide, the user is able to change a part of the second period of time or the entire second period of time to the third period of time.

### (3-2-4-1) Comparison between control in second period of time and control in third period of time

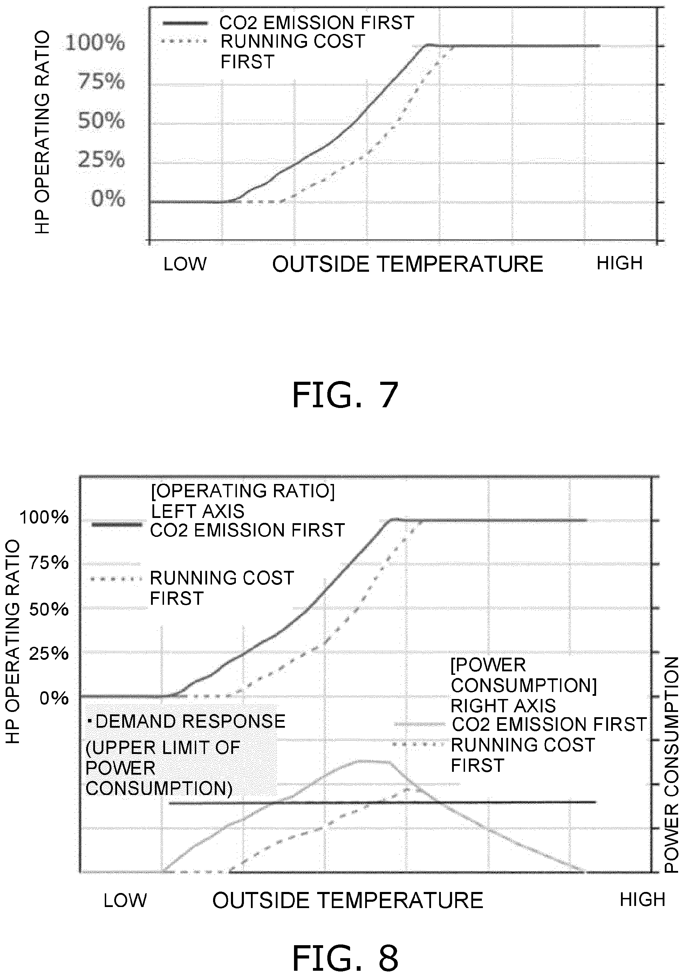

FIG. 7 illustrates a comparison between the control performed by the operation control unit 282 in the second period of time and the control performed by the operation control unit 282 in the third period of time, in the form of an HP operating ratio relative to an outside temperature. The HP operating ratio refers to a ratio of the amount of heat applied by the heat pump unit 220 in a sum of the amount of heat applied by the heat pump unit 220 and the amount of heat applied by the boiler unit 210. As illustrated in FIG. 7, when the outside temperature is low, the COP of the heat pump unit 220 is small. As a result, the HP operating ratio is 0%, so that the boiler unit 210 heats the working fluid singly. When the outside temperature is high, the COP of the heat pump unit 220 is high. As a result, the HP operating ratio is 100%, so that the heat pump unit 220 heats the working fluid singly.

In the second period of time, the operation control unit 282 performs the control to prioritize the reduction in emission of carbon dioxide. In the third period of time, the operation control unit 282 performs the control to prioritize the reduction in running cost. As illustrated in FIG. 7, the HP operating ratio tends to be high by the control that prioritizes the reduction in emission of carbon dioxide while the HP operating ratio tends to be low by the control that prioritizes the reduction in running cost, even at the same outside temperature. The graph of FIG. 7 is not fixed, and varies in accordance with changes in, for example, prices of electricity and fuel, a COP of the heat pump unit 220, and an emission of carbon dioxide in producing electric power per unit supply power.

### (3-2-4-2) Control in first period of time

FIG. 8 is such a graph that an exemplary relationship between the outside temperature and the power consumption is added to the lower side of FIG. 7. As the HP operating ratio increases, the power consumption at or below a certain outside temperature also increases. When the outside temperature exceeds the certain temperature, the amount of heat for air heating decreases, so that the power consumption lowers gradually.

The graph of FIG. 8 also shows an upper limit of the power consumption acquired by the upper limit value acquisition unit 281 (i.e., the upper limit value of the power consumption set for the heating system 203). The operation control unit 282 controls the operation of the heat pump unit 220 to maintain the power consumption by the heat pump unit 220 at a value below the upper limit of power consumption in FIG. 8, in the first period of time corresponding to the adjustment period of the "control request" from the control request issuance unit 15d to the control device 30. Then, when the amount of heat applied to the working fluid only by the heat pump unit 220 is insufficient in the first period of time, the operation control unit 282 causes the boiler unit 210 to carry out the operation, so that the burner 211 applies heat to the working fluid by an insufficient amount of heat owing to the restriction on the power consumption by the heat pump unit 220 to a value below the upper limit value.

As described above, in the second period of time, the HP operating ratio is determined such that the emission of carbon dioxide from the heating system 203 is reduced, and in the third period of time, the HP operating ratio is determined such that the running cost of the heating system 203 is reduced. In the first period of time, on the basis of the control, the operation of the heat pump unit 220 is controlled such that the power consumption by the heat pump unit 220 does not exceed the upper limit of power consumption. When the amount of heat for air heating cannot be secured in the first period of time due to the reduction in performance of the heat pump unit 220, the operation control unit 282 starts the boiler unit 210 or enhances the operation of the boiler unit 210 to compensate for the insufficient amount of heat.

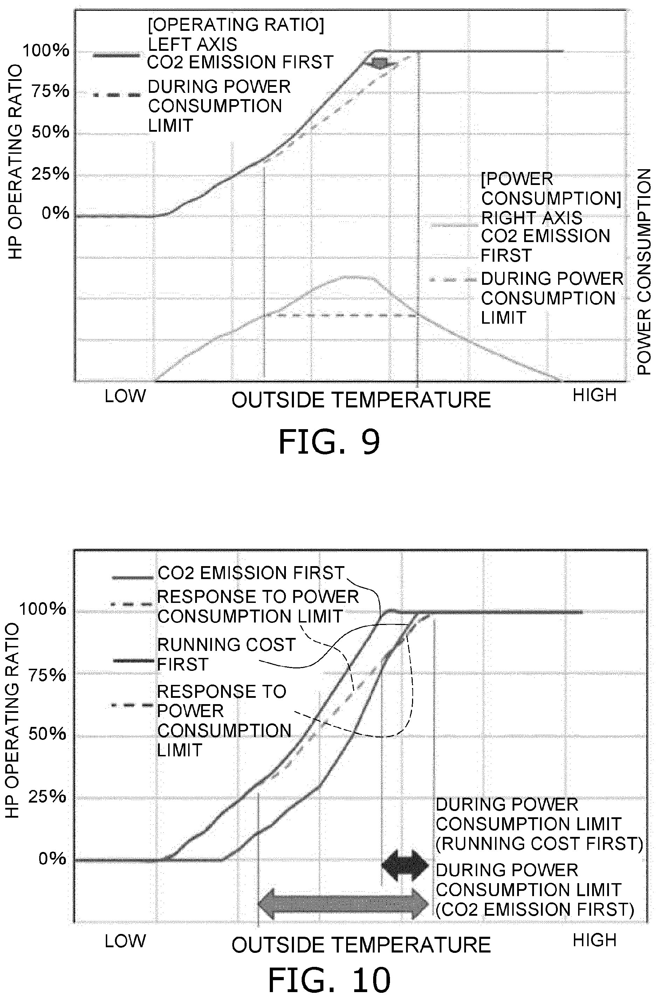

FIG. 9 is a graph showing a comparison between an HP operating ratio under control for "CO2 emission first" in the second period of time during which a priority is given to the reduction in emission of carbon dioxide and an HP operating ratio under control for "power consumption limit" in the first period of time in response to the "control request". The HP operating ratio at "power consumption limit", which is indicated by a dashed line, becomes smaller than the HP operating ratio under the control for "CO2 emission first". The amount of heat applied by the heat pump unit 220 is reduced due to the power consumption limit, and the operation control unit 282 causes the boiler unit 210 to compensate for the insufficient amount of heat; therefore, the HP operating ratio at "power consumption limit" decreases.

FIG. 10, similar to FIG. 9, illustrates a comparison between an HP operating ratio under the control for "CO2 emission first" in the second period of time and an HP operating ratio under the control for "power consumption limit" in the first period of time. FIG. 10 also illustrates a comparison between an HP operating ratio under control for "running cost first" in the third period of time and an HP operating ratio under control for "power consumption limit" in the first period of time. According to each comparison, the amount of heat applied by the heat pump unit 220 is reduced at "power consumption limit", and the operation control unit 282 causes the boiler unit 210 to compensate for the insufficient amount of heat; therefore, the HP operating ratio decreases.

### (3-2-4-3) Relationship between various kinds of control by operation control unit 282 and CO2 emission

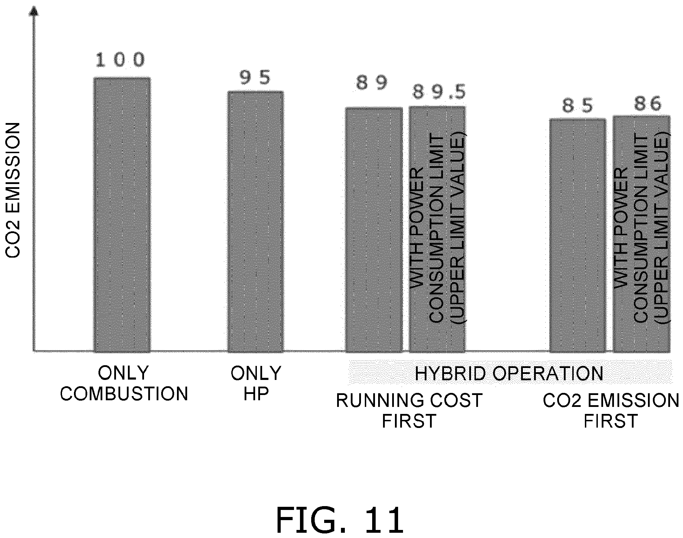

FIG. 11 is a graph showing a relationship between various kinds of control by the operation control unit 282 and a CO2 emission. FIG. 11 illustrates a CO2 emission under six kinds of control, that is, control to apply heat for air heating singly by the boiler unit 210, control to apply heat for air heating singly by the heat pump unit 220, control for "running cost first" in the third period of time, control for "power consumption limit" in the first period of time based on the control for "running cost first" in the third period of time, control for "CO2 emission first" in the second period of time, and control for "power consumption limit" in the first period of time based on the control for "CO2 emission first" in the second period of time. As illustrated in FIG. 11, assuming that the CO2 emission under the control to apply heat for air heating singly by the boiler unit 210 is 100, the CO2 emissions under the remaining five kinds of control are respectively 95, 89, 89.5, 85, and 86. It should be noted that the graph of FIG. 11 shows an average value of numerical values at some typical outside temperatures.

### (4) Features of heating system 203

### (4-1)

According to the heating system 203, the operation control unit 282 controls the operation of the heat pump unit 220 to maintain the power consumption at a value below the upper limit value (e.g., the upper limit of power consumption in FIG. 8) in the first period of time during which the power consumption is restricted to a value below the upper limit value. This configuration reduces the power consumption by the heat pump unit 220 during peak hours of electric power supply by the power company 1a in the region where the heating system 203 is installed, and keeps a balance between a supply of electricity and a demand for electricity in the region.

According to the heating system 203, in addition, the operation control unit 282 causes the boiler unit 210 to carry out the operation for a supplemental purpose when the amount of heat applied to the working fluid by the heat pump unit 220 is insufficient in the first period of time in which the power management apparatus 10 of the power company 1a issues a "control request" (i.e., the electric power adjustment period). This configuration allows the user of the heating system 203 to enjoy air heating, hot water supply, and the like without considerable deterioration in comfort.

### (4-2)

According to the heating system 203, the upper limit value acquisition unit 281 acquires the information about the upper limit value of the power consumption, from the power management apparatus 10 of the power company 1a that supplies electric power to the heat pump unit 220. This configuration allows the user or manager of the heating system 203 to give cooperation to the power company 1a which as an electricity supplier, as to achievement in the balance between the supply of electricity and the demand for electricity in the region.

### (4-3)

Typically, the emission of carbon dioxide from the heat pump unit 220 during operation is smaller than the emission of carbon dioxide from the boiler unit 210 during operation. In view of this respect, according to the heating system 203, the operation control unit 282 causes the heat pump unit 220 to carry out the operation preferentially under the control for "CO2 emission first" in the second period of time and causes the boiler unit 210 to carry out the operation in the first period of time during which the power consumption by the heat pump unit 220 is restricted to a value below the upper limit value, by the insufficient amount of heat owing to the restriction on the power consumption to a value below the upper limit value. This configuration allows the heating system 203 to effectively contribute to reduction in emission of carbon dioxide on a global scale.

### (4-4)

According to the heating system 203, the operation control unit 282 controls the operation of the heat pump unit 220 and the operation of the boiler unit 210 so as to reduce the total emission of carbon dioxide in the second period of time during which the power consumption is not necessarily restricted to a value below the upper limit value. This configuration allows the heating system 203 to effectively contribute to reduction in emission of carbon dioxide on a global scale even in the second period of time.

### (4-5)

In the heating system 203, basically, the periods of time other than the first period of time are set at the second period of time. However, the user is able to change a part of the second period of time or the entire second period of time to the third period of time. In the third period of time, the operation control unit 282 causes the heat pump unit 220 and the boiler unit 210 to carry out the operations so as to reduce the sum of the first running cost, which is an electricity rate, of the heat pump unit 220 and the second running cost, which is a fuel charge, of the boiler unit 210. As described above, the heating system 203 is capable of carrying out the operation for "running cost first" by changing a part of the second period of time or the entire second period of time during which the control for "CO2 emission first" is performed, to the third period of time in accordance with the need of the user. This configuration allows the user to enjoy a merit of cost reduction. The heating system 203 enables achievement in balance between the supply of electricity and the demand for electricity in the region in the first period of time.

### (5) Modifications of heating system

### (5-1) Modification A

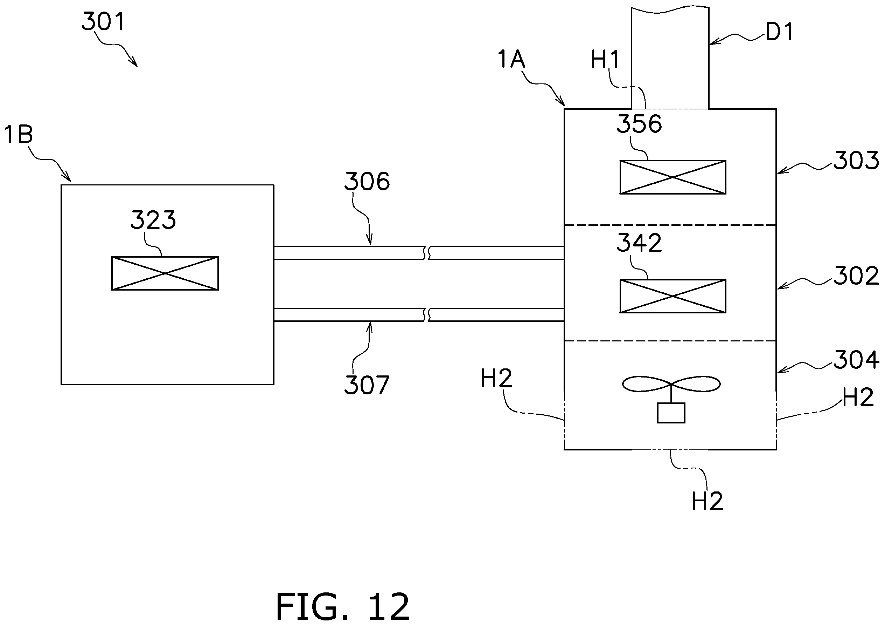

In the foregoing embodiment, the present disclosure is directed to each heating system 203 configured to heat air in a room with the working fluid, such as water, that circulates through the flow circuit 203a. The present disclosure may alternatively be directed to, as illustrated in FIG. 12, an air conditioning system 301 configured to carry out a heating operation by heating air with a heat pump 302 and a combustion apparatus 303.

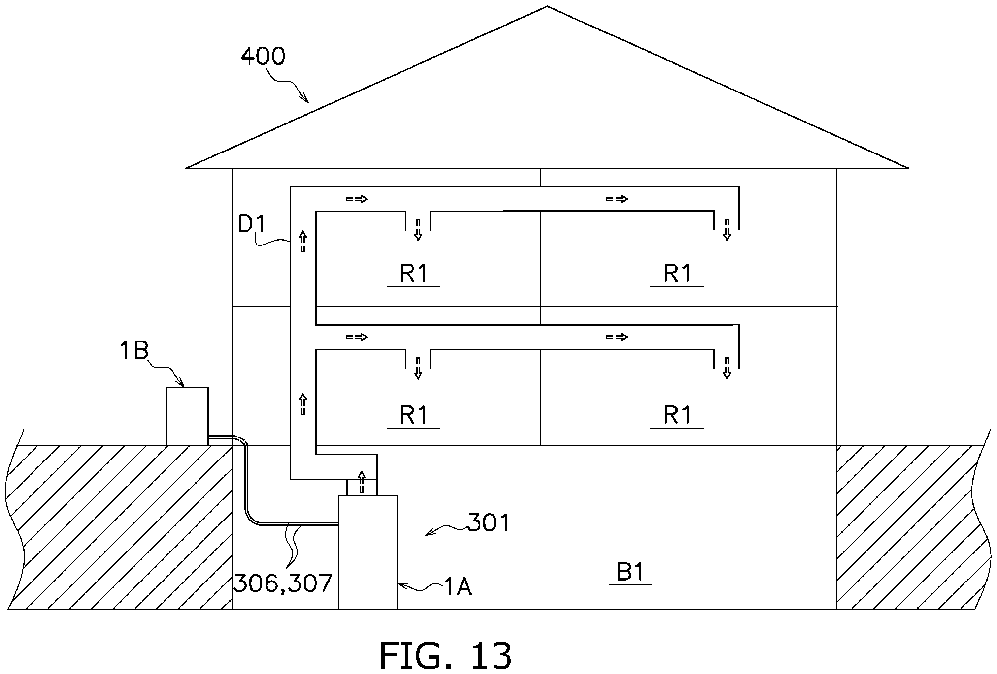

As illustrated in FIGS. 12 and 13, the air conditioning system 301 mainly includes the heat pump 302 including a refrigerant circuit in which a refrigerant is sealed, the combustion apparatus 303 configured to generate heat with flame, and a fan 304 configured to send, to rooms R1, air heated by the heat pump 302 and the combustion apparatus 303.

The air conditioning system 301 includes a first unit 1A accommodating utilization-side components of the heat pump 302, combustion apparatus 303, and fan 304, and a second unit 1B accommodating a heat source-side component of the heat pump 302. The first unit 1A includes, for example, a utilization-side heat exchanger 342 of the heat pump 302, a furnace heat exchanger 356 of the combustion apparatus 303, and the fan 304. The first unit 1A has an opening (an air outlet H1) for sending air. The air outlet H1 communicates with one end of a duct D1. The first unit 1A also has an opening (an air inlet H2) for taking in air to be sucked into the fan 304. The second unit 1B includes a heat source-side heat exchanger 323 of the heat pump 302. One of or both the first unit 1A and the second unit 1B is or are each equipped with a microcomputer for controlling operations of the respective units of the air conditioning system 301, and various electric components.

In the air conditioning system 301, the first unit 1A, the second unit 1B, and refrigerant connection pipes 306 and 307 constitute the refrigerant circuit in the heat pump 302. The heat pump 302 is configured, during operation, to heat or cool air to be sent to the duct D1, by a vapor compression refrigeration cycle achieved in the refrigerant circuit. The combustion apparatus 303 is configured to heat air to be sent to the duct D1, with a heat source different from the heat pump 302 (specifically, heat generated by fuel combustion).

The air conditioning system 301 may be installed in a building, such as a house, in various manners including a duct split type and a rooftop type. For example, in a case where the air conditioning system 301 is installed in a house 400 as illustrated in FIG. 13, the first unit 1A and the second unit 1B are disposed separately. In the example illustrated in FIG. 13, the first unit 1A is installed in a basement B1, the second unit 1B is installed outside, and the first unit 1A and the second unit 1B are connected with the refrigerant connection pipes 306 and 307. In FIG. 13, dashed arrows indicate a direction of air flowing from the air conditioning system 301 to the rooms R1 through the duct D1.

The air conditioning system 301 illustrated in FIGS. 12 and 13, as in the foregoing heating system 203, reduces power consumption by the heat pump 302 during peak hours of electric power supply, and keeps a balance between a supply of electricity and a demand for electricity in a region. According to the air conditioning system 301, in addition, when an amount of heat applied to a working fluid only by the heat pump 302 is insufficient, the combustion apparatus 303 carries out an operation for a supplemental purpose. This configuration therefore allows a user to enjoy air heating without considerable deterioration in comfort.

### (5-2) Modification B

In the foregoing embodiment, the power meter 7 is disposed in each of the buildings A and B, and the control device 30 controls each appliance 20 in response to a "control request" issued from the control request issuance unit 15d of the power management apparatus 10. This configuration keeps the balance between the supply of electricity and the demand for electricity in the region. Each heating system 203 itself does not include a power meter device. In restricting the power consumption by the heating system 203 to a value below the predetermined upper limit value, the heating system 203 estimates the power consumption by the heat pump unit 220 from, for example, the capacity of the compressor.

Each heating system 203 itself may alternatively include a power meter 7 and may cause the heat pump unit 220 to carry out the operation to maintain a measured value of the power meter 7 at a value below the upper limit value of the power consumption by the heat pump unit 220.

### (5-3) Modification C

In the foregoing embodiment, the power management apparatus 10 of the power company 1a issues a "control request" for encouraging an adjustment to electric power usage, to the control device 30 in each of the buildings A and B. However, a service entity for achieving a balance between a supply of electricity and a demand for electricity is not limited to the power company 1a. For example, an aggregator may serve as an energy management service entity. The aggregator refers to a service provider that issues a "control request" for encouraging an adjustment to electric power usage, to an electricity consumer, such as each of the buildings A and B, in response to instructions for power saving and output control from a power company. In this case, the upper limit value acquisition unit 281 of each heating system 203 indirectly acquires the "control request" for encouraging an adjustment to electric power usage, from the aggregator.

Also in the foregoing embodiment, the control device 30 and heating system 203 in each of the buildings A and B are connected to the power management apparatus 10 of the power company 1a via the Internet 101a. However, the control device 30 and the heating system 203 are not necessarily connected to the power management apparatus 10. In the case where the control device 30 and the heating system 203 are not connected to the power management apparatus 10, a "control request" for encouraging an adjustment to, for example, electric power usage for the next day is input manually to the control device 30 or the heating system 203.

### (5-4) Modification D

In the foregoing embodiment, each upper limit value acquisition unit 281 indirectly acquires the upper limit value of the power consumption by the corresponding heating system 203, from the power management apparatus 10 of the power company 1a.

Alternatively, each heating control unit 280 may include a second calculation unit 292 (see a dashed line in FIG. 6) configured to calculate an upper limit value of power consumption by the corresponding heating system 203 so as to reduce a total emission of carbon dioxide. The second calculation unit 292 may be disposed as a functional block practicable by the control computation device of the heating control unit 280. Information for the calculation of the upper limit value of the power consumption by the heating system 203 is preferably stored in the storage unit 294 in advance; however, the user may alternatively input this information manually.

It is typically recognized that carbon dioxide is emitted in large amounts from the boiler unit 210. In addition, carbon dioxide is also emitted in generating (producing) electric power to be consumed by the heat pump unit 220. Furthermore, carbon dioxide is emitted upon thermal power generation since oil is burned, and carbon dioxide is also emitted in manufacturing a power generation apparatus that uses natural energy. In view of these respects, according to Modification D, the second calculation unit 292 calculates the upper limit value of the power consumption, so as to reduce the total emission of carbon dioxide. According to Modification D, a heating system including the second calculation unit 292 is capable of effectively contributing to reduction in emission of carbon dioxide on a global scale even in a case where the heating system is not connected to, for example, the power management apparatus 10 of the power company 1a.

### (5-5) Modification E

In the foregoing embodiment, the fluid to be heated is water; however, an antifreeze may be used in place of water.

### (5-6)

While various embodiments of a fluid heating system have been described herein above, it is to be appreciated that various changes in form and detail may be made without departing from the scope of the appended claims.

### REFERENCE SIGNS LIST

10: power management apparatus (external apparatus)
203: heating system (fluid heating system)
203a: flow circuit (flow path)
210: boiler unit (combustion apparatus)
211: burner (combustion unit)
220: heat pump unit (heat pump apparatus)
221: heat pump circuit (refrigerant circuit)
280: heating control unit (control unit)
281: upper limit value acquisition unit
282: operation control unit
291: first calculation unit
292: second calculation unit
293: third calculation unit
301: air conditioning system
302: heat pump
303: combustion apparatus

### CITATION LIST

### PATENT LITERATURE

Patent Literature 1: JP 5,597,767 B

## Claims

1. A fluid heating system (203) comprising:
a heat pump apparatus (220) including a refrigerant circuit (221) through which a refrigerant circulates, the heat pump apparatus being configured to carry out an operation with electric power supplied by a power company having power generation plants;
a flow path (203a) through which a fluid heated with the refrigerant flows;
a combustion apparatus (210) including a combustion unit (211), the combustion apparatus being configured to carry out an operation of heating the fluid, separately from the heat pump apparatus; and
a control unit (280) including
an upper limit value acquisition unit (281) configured to acquire an upper limit value of power consumption by the heat pump apparatus, and
an operation control unit (282) configured to control the operation of the heat pump apparatus to maintain the power consumption at a value below the upper limit value, and configured to cause the combustion apparatus to carry out the operation when an amount of heat applied to the fluid by the heat pump apparatus is insufficient, **characterized in that**:
the power consumption is restricted to the value below the upper limit value during a first period of time;
the combustion apparatus is caused to carry out the operation on condition that the amount of heat applied to the fluid by the heat pump apparatus is insufficient in the first period of time;
the control unit is configured to periodically receive information on an emission of carbon dioxide in producing electric power per unit supply power,
the emission of carbon dioxide in producing electric power per unit supply power varying depending on the number of the power generation plants in operation and the operating rate of each operating power generation plant;
the fluid heating system further comprises
a first calculation unit configured to calculate a total emission of carbon dioxide corresponding to a sum of an emission of carbon dioxide from the heat pump apparatus during the operation and an emission of carbon dioxide from the combustion apparatus during the operation, based on the information on the emission of carbon dioxide in producing electric power per unit supply power, and
a second calculation unit configured to calculate the upper limit value so as to reduce the total emission of carbon dioxide; and
the upper limit value acquisition unit is configured to acquire the upper limit value from the second calculation unit.

2. The fluid heating system according to claim 1, wherein,
on condition that the amount of heat applied to the fluid by the heat pump apparatus is insufficient in the first period of time, the operation control unit (282) is configured to cause the combustion apparatus to carry out the operation to heat the fluid by an insufficient amount of heat owing to the restriction on the power consumption by the heat pump apparatus to a value below the upper limit value.

3. The fluid heating system according to claim 1 or 2, wherein
the fluid comprises water, and
the water heated in the flow path is used for one of or both air heating and hot water supply.

4. The fluid heating system according to claim 1 or 2, wherein
the fluid comprises air, and
the air heated in the flow path is used for air heating.

## Patentansprüche

1. Fluidheizsystem (203), das aufweist:
eine Wärmepumpenvorrichtung (220), die einen Kühlmittelkreislauf (221) aufweist, durch den ein Kühlmittel zirkuliert, wobei die Wärmepumpenvorrichtung konfiguriert ist, einen Betrieb mit elektrischem Strom auszuführen, die von einem Stromversorgungsunternehmen mit Stromerzeugungsanlagen geliefert wird;
einen Strömungsweg (203a), durch den ein mit dem Kühlmittel erwärmtes Fluid strömt;
eine Verbrennungsvorrichtung (210) mit einer Verbrennungseinheit (211), wobei die Verbrennungsvorrichtung konfiguriert ist, einen Betrieb des Erwärmens des Fluids getrennt von der Wärmepumpenvorrichtung auszuführen; und
eine Steuereinheit (280), die aufweist:
einer Erfassungseinheit (281) für einen oberen Grenzwert, die konfiguriert ist, einen oberen Grenzwert des Stromverbrauchs durch die Wärmepumpenvorrichtung zu erfassen, und
eine Betriebssteuereinheit (282), die konfiguriert ist, den Betrieb der Wärmepumpenvorrichtung zu steuern, um den Stromverbrauch auf einem Wert unter dem oberen Grenzwert zu halten, und konfiguriert ist, die Verbrennungsvorrichtung zu veranlassen, den Betrieb auszuführen, wenn eine Wärmemenge, die von der Wärmepumpenvorrichtung auf das Fluid angewendet wird, unzureichend ist,
**dadurch gekennzeichnet, dass**:
der Stromverbrauch während einer ersten Zeitspanne auf den Wert unter dem oberen Grenzwert beschränkt ist;
die Verbrennungsvorrichtung veranlasst wird, den Betrieb unter der Bedingung auszuführen, dass die Wärmemenge, die durch die Wärmepumpenvorrichtung auf das Fluid angewendet wird, in der ersten Zeitspanne unzureichend ist;
die Steuereinheit konfiguriert ist, periodisch Informationen über eine Emission von Kohlendioxid bei der Erzeugung von elektrischem Strom pro Einheit des Versorgungsstroms zu empfangen,
wobei die Emission von Kohlendioxid bei der Erzeugung von elektrischem Strom pro Einheit des Versorgungsstroms abhängig von der Anzahl der in Betrieb befindlichen Stromerzeugungsanlagen und der Betriebsrate jeder in Betrieb befindlichen Stromerzeugungsanlage variiert;
das Fluidheizsystem ferner aufweist
eine erste Berechnungseinheit, die konfiguriert ist, eine Gesamtemission von Kohlendioxid zu berechnen, die einer Summe einer Emission von Kohlendioxid von der Wärmepumpenvorrichtung während des Betriebs und einer Emission von Kohlendioxid von der Verbrennungsvorrichtung während des Betriebs entspricht, basierend auf den Informationen über die Emission von Kohlendioxid bei der Erzeugung von elektrischem Strom pro Einheit des Versorgungsstroms, und
eine zweite Berechnungseinheit, die konfiguriert ist, den oberen Grenzwert zu berechnen, um die Gesamtemission von Kohlendioxid zu reduzieren; und
die Erfassungseinheit für den oberen Grenzwert konfiguriert ist, den oberen Grenzwert von der zweiten Berechnungseinheit zu erfassen.

2. Fluidheizsystem nach Anspruch 1, wobei
unter der Bedingung, dass die von der Wärmepumpenvorrichtung auf das Fluid angewendete Wärmemenge in der ersten Zeitspanne unzureichend ist, die Betriebssteuereinheit (282) konfiguriert ist, die Verbrennungsvorrichtung zu veranlassen, den Betrieb zum Erwärmen des Fluids um eine unzureichende Wärmemenge aufgrund der Beschränkung des Stromverbrauchs durch die Wärmepumpenvorrichtung auf einen Wert unter dem oberen Grenzwert durchzuführen.

3. Fluidheizsystem nach Anspruch 1 oder 2, wobei
das Fluid Wasser aufweist und
das im Strömungsweg erwärmte Wasser für eines oder beides einer Luftheizung und einer Warmwasserversorgung verwendet wird.

4. Fluidheizsystem nach Anspruch 1 oder 2, wobei
das Fluid Luft aufweist und
die im Strömungsweg erwärmte Luft zur Luftheizung verwendet wird.

## Revendications

1. Système de chauffage par fluide (203), comprenant :
un dispositif de pompe à chaleur (220) comprenant un circuit de réfrigérant (221) où circule un réfrigérant, ledit dispositif de pompe à chaleur étant prévu pour exécuter un processus avec de l'énergie électrique fournie par une compagnie d'électricité à centrales de production d'énergie ;
un chemin d'écoulement (203a) où s'écoule un fluide chauffé avec le réfrigérant ;
un dispositif de combustion (210) comprenant une unité de combustion (211),
ledit dispositif de combustion étant prévu pour exécuter un processus de chauffage du fluide, séparément du dispositif de pompe à chaleur ; et
une unité de commande (280) comprenant
une unité d'acquisition de valeur limite supérieure (281) prévue pour acquérir une valeur limite supérieure de consommation d'énergie par le dispositif de pompe à chaleur, et
une unité de commande de fonctionnement (282) prévue pour commander le fonctionnement du dispositif de pompe à chaleur afin de maintenir la consommation d'énergie à une valeur inférieure à la valeur limite supérieure, et prévue pour amener le dispositif de combustion à exécuter le processus si une quantité de chaleur appliquée au fluide par le dispositif de pompe à chaleur est insuffisante,
**caractérisé en ce que**
la consommation d'énergie est limitée à une valeur inférieure à la valeur limite supérieure pendant une première période ;
le dispositif de combustion est entraîné à exécuter le processus à condition que la quantité de chaleur appliquée au fluide par le dispositif de pompe à chaleur soit insuffisante lors de la première période ;
l'unité de commande est prévue pour recevoir périodiquement des informations sur l'émission de dioxyde de carbone lors de la production d'énergie électrique par unité d'énergie fournie,
l'émission de dioxyde de carbone lors de la production d'énergie électrique par unité d'alimentation varie en fonction du nombre de centrales électriques en service et du rendement de chaque centrale électrique en service ;
le système de chauffage par fluide comprend en outre
une première unité de calcul prévue pour calculer une émission totale de dioxyde de carbone correspondant à la somme d'une émission de dioxyde de carbone provenant du dispositif de pompe à chaleur pendant le fonctionnement et d'une émission de dioxyde de carbone provenant du dispositif de combustion pendant le fonctionnement, sur la base des informations sur l'émission de dioxyde de carbone lors de la production d'énergie électrique par unité d'énergie fournie, et
une deuxième unité de calcul prévue pour calculer la valeur limite supérieure de manière à réduire l'émission totale de dioxyde de carbone ; et **en ce que**
l'unité d'acquisition de valeur limite supérieure est prévue pour acquérir la valeur limite supérieure à partir de la deuxième unité de calcul.

2. Système de chauffage par fluide selon la revendication 1, où,
à condition que la quantité de chaleur appliquée au fluide par le dispositif de pompe à chaleur soit insuffisante au cours de la première période, l'unité de commande de fonctionnement (282) est prévue pour entraîner le dispositif de combustion à exécuter le processus de chauffage du fluide par une quantité insuffisante de chaleur en raison de la limitation de la consommation d'énergie par le dispositif de pompe à chaleur à une valeur inférieure à la valeur limite supérieure.

3. Système de chauffage par fluide selon la revendication 1 ou la revendication 2, où
le fluide comprend de l'eau, et où
l'eau chauffée dans le chemin d'écoulement est utilisée pour le chauffage d'air et la production d'eau chaude, ou les deux.

4. Système de chauffage par fluide selon la revendication 1 ou la revendication 2, où
le fluide comprend de l'air, et où
l'air chauffé dans le chemin d'écoulement est utilisé pour le chauffage d'air.
